Europäisches Patentamt

European Patent Office

Office européen des brevets

(1) Publication number: **0 177 622**
**B1**

(12) **EUROPEAN PATENT SPECIFICATION**

(45) Date of publication of patent specification: **01.03.89**

(21) Application number: **84112035.5**

(22) Date of filing: **08.10.84**

(60) Divisional application **88107510 filed on 10.05.88.**

(51) Int. Cl.⁴: **C 08 F 210/16, C 08 F 4/64, C 08 F 2/00**

(54) Process for producing ethylene copolymer.

(43) Date of publication of application:
**16.04.86 Bulletin 86/16**

(45) Publication of the grant of the patent:
**01.03.89 Bulletin 89/09**

(84) Designated Contracting States:
**DE FR GB IT NL**

(56) References cited:
**DE-A-1 236 200**
**DE-A-2 535 597**
**US-A-3 219 651**

(73) Proprietor: **SUMITOMO CHEMICAL COMPANY, LIMITED**
**15 Kitahama 5-chome Higashi-ku**
**Osaka-shi Osaka 541 (JP)**

(72) Inventor: **Takao, Hiroyoshi**
**604, Futsuresukaihaitsu**
**7-16, Kurosunadai-3-chome Chiba-shi (JP)**
Inventor: **Yamamoto, Keisaku**
**3-14, Aobadai-5-chome**
**Ichihara-shi (JP)**
Inventor: **Harada, Hiroyuki**
**1353-4, Shiizu**
**Ichihara-shi (JP)**

(74) Representative: **Henkel, Feiler, Hänzel & Partner**
**Möhlstrasse 37**
**D-8000 München 80 (DE)**

Courier Press, Leamington Spa, England.

# EP 0 177 622 B1

**Description**

## BACKGROUND OF THE INVENTION

### Field of the Invention

This invention relates to a process for producing a copolymer of ethylene and α-olefin or a copolymer of ethylene, an α-olefin and a non-conjugated diene.

### Description of the Prior Art

There is well known a process for producing a copolymer of ethylene and α-olefin or ethylene, an α-olefin and a non-conjugated diene (hereinafter referred to as "ethylene copolymer") by using a so-called Zeigler-Natta catalyst comprising a combination of a compound of a transition metal belonging to Group IV or V of the periodic table and an organoaluminium compound. As the production process, there are known a solution polymerization method comprising conducting polymerization in a solvent capable of dissolving the resulting copolymer, or a slurry polymerization method comprising conducting polymerization in a polymerization medium substantially incapable of dissolving the resulting copolymer, and dispersing a particulate polymer into the polymerization medium. Among these production processes, the slurry polymerization method is widely used because it is advantageous as compared with the solution polymerization method in that the viscosity of solution is low, that stirring and transfer are easy, and that separation of the polymer from the polymerization medium is easy.

However, according to the slurry polymerization method, the resulting polymer particles adhere to agitating blades, reactor walls, pipes for transfer or the like, and mutual adhesion of the polymer particles also occurs because in particular, ethylene copolymers have adhesiveness. In the case of the ethylene copolymers, this adhesion becomes a particularly serious problem.

In order to prevent such mutual adhesion of the polymer particles, adhesion of the polymer particles to reactor walls or agitating blades, and the like, there has been proposed a method in which polymerization reaction is conducted at a relatively low temperature of −80°C to 30°C (Japanese Patent Publication No. 10,491/61). However, in spite of the procedure at such a low temperature, there has not yet effectively been prevented mutual adhesion of the polymer particles, their adhesion to reactor walls or agitating blades, and the like.

Furthermore, DE—A—1 236 200 discloses the use of adhesion preventing agents in the production of resins, and the adhesion preventing agents include an alkali salt, ammonium salt, or mono-, di- or triethanol amine salt of alkylsulfonic acid, alkyl-arylsulfonic acid, alkylsulfaten or fatty acid, as well as sodium salt of alkyl-arylsulfonic acid and as a cationic active example a long-chain amine salt.

### Summary of the Invention

In producing an ethylene copolymer by such a slurry polymerization method, the present inventors have investigated a process for producing an ethylene copolymer efficiently by lowering the above-mentioned defects and preventing mutual adhesion of the polymer particles, their adhesion to reactor walls or agitating blades, and the like, and have consequently found that the purpose described above can be achieved by the presence of a special adhesion-preventing agent in a polymerization reaction system, whereby this invention has been accomplished.

The objects of this invention is to provide a process for producing an ethylene copolymer effectively.

According to this invention, there is provided a process for producing an ethylene copolymer by copolymerizing ethylene with an α-olefin or copolymerizing ethylene with an α-olefin and a non-conjugated diene in the presence of a Ziegler-Natta catalyst comprising an organoaluminum compound and a compound of a transition metal belonging to Group IV or V of the periodic table or comprising these and a catalyst-activating agent, in a polymerization medium which is substantially incapable of dissolving the resulting ethylene copolymer, and thereby producing a rubberlike ethylene copolymer in particulate form, which is characterized by adding to the polymerization reaction system, as adhesion-preventing agent, a composition comprising (a) a polysulfone copolymer of sulfur dioxide and an olefin compound, (b) a polyamine comprising a product of reaction of epichlorohydrin with an N-aliphatic hydrocarbylalkylenediamine, and (c) an oil-soluble sulfonic acid.

### Detailed Description of the Invention

As the α-olefin used in this invention, there are exemplified propylene, 1-butene, 4-methyl-1-pentene and 1-hexene.

As the non-conjugated diene, there are exemplified 1,4-hexadiene, dicyclopentadiene, methyldicyclopentadiene, vinylnorbornene, 5-ethylidene-2-nonbronene and isopropenylnorbornene.

As the polymerization medium which is substantially incapable of dissolving the ethylene copolymer, there are exemplified propylene, propane, 1-butene, butane, methylene chloride, ethylene chloride and ethyl chloride.

These are used alone or as a mixture thereof. The above-mentioned polymerization medium becomes a reaction component in this invention in some cases, and in this case, it is used in an amount larger than the amount consumed for the reaction and the surplus medium acts as solvent.

The composition of the ethylene copolymer can be changed over a wide range, but when the ethylene

2

content becomes high, a partly crystalline polymer is produced, and hence for obtaining a rubberlike copolymer, it is preferable to set the starting monomer ratio so that the ethylene content of the ethylene copolymer is 20 to 90% by weight, preferably 30 to 86% by weight.

As the catalyst for polymerization, there is used a so-called Ziegler-Natta catalyst which gives a heretofore well-known rubberlike ethylene copolymer. This catalyst comprises an organoaluminum compound and a compound of a transition metal belonging to Group IV or V of the periodic table, and the combination of these can easily be selected by those skilled in the art. Further, it is also possible to co-use a catalyst-activating agent such as an ester of halogenated carboxylic acid and a halogenated ketone, and a catalyst-modifying agent such as a ketone, an ester and an alcohol.

Here, the organoaluminum compound is a compound represented by the general formula $R'_nAlX_{3-n}$ (wherein $R'$ is a hydrocarbon group having 1 to 20 carbon atoms, X is a halogen atom or an alkoxyl group, and n is a number satisfying $1 \leqq n \leqq 3$), for example, a compound represented by the formula $R'_3Al$, $R'_2AlX$, $R'AlX_2$ and $R'_{1.5}AlX_{1.5}$, and these compounds are used alone or as a mixture thereof. Concrete examples of these compounds include triethylaluminum, triisopropylaluminum, triisobutylaluminum, trihexyl-aluminum, diethylaluminum chloride, diethylaluminum bromide, diisobutylaluminum chloride, diisobutylaluminum bromide, ethylaluminum sesquichloride, isobutylaluminum sesquichloride, ethylaluminum dichloride and isobutylaluminum chloride.

As the compound of a transition metal belonging to Group IV or V of the periodic table, vanadium compounds and titanium compounds are preferred. As the vanadium compounds, there are exemplified compounds represented by the general formula $VX_4$, $VOX_3$ or $VO(OR')_nX_{3-n}$ wherein $R'$, X and n have the same meanings as defined above. Concrete examples of these compounds include vanadium tetrachloride, vanadium tetrabromide, vanadium oxytrichloride, vanadic acid triethoxide, vanadic acid diethoxychloride, vanadic acid ethoxydichloride, vanadic acid tributoxide, vanadic acid dibutoxychloride, vanadic acid butoxydichloride and vanadium triacetylacetonato. As the titanium compounds, there are exemplified titanium tetrachloride, titanium trichloride and titanium trichloride supported on a magnesium compound or silica. These can be used alone or as a mixture thereof.

Further, as the catalyst-activating agent, there are used esters of halogenated carboxylic acids, halogenated ketones and halogenated hydrocarbons. Concrete examples of these compounds include methyl trichloroacetate, butyl perchlorocrotonate, butyl 2,3,4,4-tetrachloro-3-butenate, ester of trichloroacetic acid and ethyl cellosolve, hexachloroacetone and perchlorobutadiene.

As to the polymerization condition, it is preferable to conduct the polymerization at a temperature lower than that of conventional polymerization conditions of olefins (e.g., at 40° to 120°C, at atmospheric pressure to 9800 kPa (100 kg/km²)).

When the polymerization reaction is conducted at a high temperature, adhesion of the resulting copolymer particles occurs. The polymerization at an extremely low temperature causes a decrease of the polymerization reaction rate, requires a high energy for removing heat of polymerization to maintain the system at a low temperature, and hence is not preferable. Therefore, the polymerization reaction is conducted preferably between −40°C and 60°C, more preferably between −30°C and 40°C.

The pressure is atmospheric pressure to 9800 kPa (100 kg/cm²), and the polymerization reaction is conducted in the presence or absence of a chain transfer agent.

The composition comprising (a) a polysulfone copolymer of sulfur dioxide and an olefin compound, (b) a polyamine comprising a reaction product of epichlorohydrin with an N-aliphatic hydrocarbylalkylenediamine, and (c) an oil-soluble sulfonic acid, which is the other adhesion-preventing agent, contains benzene, toluene, xylene, cyclohexane or fuel oil or a mixture thereof as solvent, and preferably comprises 5 to 20% by weight of the polysulfone copolymer, 5 to 20% by weight of the polyamine, 5 to 10% by weight of the oil-soluble sulfonic acid and 85 to 50% by weight of the solvent. Further, as the polysulfone copolymer, 1-decenepolysulfone consisting of sulfur dioxide and 1-decene and having an intrinsic viscosity of 0.04 to 0.08 (30°C, in toluene, 0.5% by weight solution) is preferred. As the polyamine, a reaction product of N-talo-1,3-diaminopropane with epichlorohydrin in a molar ratio of 1:1.5 is preferred. As the oil-soluble sulfonic acid, dodecylbenzenesulfonic acid is preferred.

The above-mentioned adhesion-preventing agent used in this invention brings about a sufficient effect even when added in a very small amount of usually 5 to 100 ppm, more preferably 10 to 50 ppm based on the polymeriation medium introduced into a reactor.

The polymerization reaction can be conducted by a batchwise or continuous operation. As to addition of the adhesion-preventing agent, in the case of the batchwise operation, said agent is added in one portion to a reaction vessel before the beginning of the polymerization, and in the case of the continuous operation, it is preferable to supply said agent to a reaction vessel continuously together with the polymerization medium. The adhesion-preventing agents described above can be used alone or as a mixture thereof.

Thus, according to the process of this invention, the polymerization reaction is not inhibited substantially, and mutual adhesion of polymer particles or adhesion of polymer particles to vessel walls, agitating blades or the like is reduced or prevented, so that an ethylene copolymer can be efficiently produced.

This invention is explained below in more detail by way of Examples, but the invention is not limited thereto.

## Example

In a 1.5-liter autoclave made of stainless steel were placed 400 g of propylene, 50 g of ethylene and 5 mg (11 ppm) of Stadis 450 [a composition consisting of a toluene solution (toluene; 66% by weight) containing 13.3% by weight of a 1:1 copolymer of 1-decene and sulfur dioxide having an intrinsic viscosity of 0.05, 13.8% by weight of a reaction product of N-talo-1,3-diaminopropane with epichlorohydrin in a molar ratio of 1:1.5 and 7.4% by weight of docecylbenzenesulfonic acid, manufactured by E. I. du Pont de Nemours & Co.], cooled to 0°C, after which 1.0 mmol of ethylaluminum sesquichloride and 0.1 mmol of vanadium oxytrichloride were continuously added. The temperature inside the autoclave was controlled at 0°C. The ratio between unreacted ethylene and propylene in the reactor was controlled so that the ratio of them is kept at constant by feeding 27 g of ethylene continuously to the reactor.

The ethylene-propylene copolymer produced by the copolymerization reaction had suspended as particles in the polymerization medium (propylene). After completion of the reaction, the polymerization was stopped by adding a small amount of methanol in the reactor, and the particulate copolymer was separated from the polymerization medium by filtration. The copolymer thus obtained was good rubberlike particles having a particle size of about 2 mm. There was observed no adhesion of copolymer particles to the inside of polymerization vessel or agitating blades.

Thus, 45 g of the copolymer was obtained. The ethylene content of the copolymer was 30% by weight as determined by infrared absorption spectrum.

## Claims

1. In a process for producing an ethylene copolymer by copolymerizing ethylene with an α-olefin or copolymerizing ethylene with an α-olefin and a non-conjugated diene in the presence of a Ziegler-Natta catalyst comprising an organoaluminum compound and a compound of a transition metal belonging to Group IV or V of the periodic table or comprising these and a catalyst-activating agent, in a polymerization medium which is substantially incapable of dissolving the resulting ethylene copolymer, and thereby producing a rubberlike ethylene copolymer in particulate form, the improvement which comprises adding to polymerization system, as an adhesion-preventing agent, a composition comprising (a) a polysulfone copolymer of sulfur dioxide and an olefin compound, (b) a polyamine comprising a reaction product of epichlorohydrin with an N-aliphatic hydrocarbylalkylenediamine, and (c) an oil-soluble sulfonic acid.

2. A process according to Claim 1, wherein the amount of the adhesion-preventing agent is 5 to 100 ppm in the polymerization medium.

3. A process according to Claim 1, wherein the polymerization medium is propylene, propane, 1-butene, butane, methylene chloride, ethylene chloride or ethyl chloride.

4. A process according to Claim 1, wherein the α-olefin is propylene or 1-butene, and the non-conjugated diene is 1,4-hexadiene, dicyclopentadiene or 5-ethylidene-2-norbornene.

5. A process according to Claim 1, wherein the polymerization temperature is −40°C to 60°C.

6. A process according to Claim 1, wherein the organoaluminum compound is triethylaluminum, diethylaluminum chloride, diisobutylaluminum chloride, ethylaluminum sesquichloride or ethylaluminum dichloride.

7. A process according to Claim 1, wherein the transition metal compound is vanadium tetrachloride, vanadium oxytrichloride, vanadic acid triethoxide, vanadic acid diethoxychloride, vanadic acid ethoxydichloride, vanadic acid tributoxide, vanadic acid dibutoxychloride, vanadic acid butoxydichloride or vanadium triacetylacetonato.

8. A process according to Claim 1, wherein a catalyst-activating agent is present in the polymerization system.

9. A process according to Claim 1, wherein the catalyst-activating agent is methyl trichloroacetate, butyl perchlorocrotonate, butyl 2,3,4,4-tetrachloro-3-butenate or trichloroacetic acid-ethyl cellosolve ester.

10. A process according to Claim 1, wherein the ethylene content of the ethylene copolymer is 20 to 90% by weight.

## Patentansprüche

1. Verfahren zur Herstellung eines Ethylen-Copolymeren durch Copolymerisieren von Ethylen mit einem α-Olefin oder Copolymerisieren von Ethylen mit einem α-Olefin und einem nicht-konjugierten Dien in Gegenwart eines Ziegler-Natta-Katalysators aus einer Organoaluminium-verbindung und einer Verbindung eines zur Gruppe IV oder V des Periodensystems gehörenden Übergangsmetalls und gegebenenfalls einem Katalysatoraktivator in einem Polymerisationsmedium, das das gebildete Ethylen-Copolymere praktisch nicht zu lösen vermag, unter Bildung eines kautschukartigen Ethylen-Copolymeren in teilchenförmiger Form, dadurch gekennzeichnet, daß dem Polymerisationssystem als haftungsverhinderndes Mittel eine Zusammensetzung, umfassend (a) ein Polysulfon-Copolymeres von Schwefeldioxid und einer Olefin-Verbindung, (b) ein aus dem Reaktionsprodukt von Epichlorhydrin mit einem N-aliphatischen Hydrocarbylalkylendiamin bestehendes Polyamin und (c) eine öllösliche Sulfonsäure, einverliebt wird.

2. Verfahren nach Anspruch 1, dadurch gekennzeichnet, daß die Menge an haftungsverhinderndem Mittel in dem Polymerisationsmedium 5—100 ppm beträgt.

3. Verfahren nach Anspruch 1, dadurch gekennzeichnet, daß das Polymerisationsmedium aus Propylen, Propan, 1-Buten, Butan, Methylenchlorid, Ethylenchlorid oder Ethylchlorid besteht.

4. Verfahren nach Anspruch 1, dadurch gekennzeichnet, daß das α-Olefin aus Propylen oder 1-Buten und das nichtkonjugierte Dien aus 1,4-Hexadien, Dicyclopentadien oder 5-Ethyliden-2-norbornen besteht.

5. Verfahren nach Anspruch 1, dadurch gekennzeichnet, daß die Polymerisationstemperatur −40°C bis 60°C beträgt.

6. Verfahren nach Anspruch 1, dadurch gekennzeichnet, daß die Organoaluminiumverbindung aus Triethylaluminium, Diethylaluminiumchlorid, Diisobutylaluminiumchlorid, Ethylaluminiumsesquichlorid oder Ethylaluminiumdichlorid besteht.

7. Verfahren nach Anspruch 1, dadurch gekennzeichnet, daß die Übergangsmetallverbindung aus Vanadiumtetrachlorid, Vanadiumoxytrichlorid, Vanadinsäuretriethoxid, Vanadinsäurediethoxychlorid, Vanadinsäureethoxydichlorid, Vanadinsäuretributoxid, Vanadinsäuredibutoxychlorid, Vanadinsäurebutoxydichlorid oder Vanadiumtriacetylacetonat besteht.

8. Verfahren nach Anspruch 1, dadurch gekennzeichnet, daß in dem Polymerisationssystem ein Katalysatoraktivator enthalten ist.

9. Verfahren nach Anspruch 1, dadurch gekennzeichnet, daß der Katalysatoraktivator aus Methyltrichloracetat, Butylperchlorcrotonat, Butyl-2,3,4,4-tetrachlor-3-butenat oder Trichloressigsäure-ethylcellosolveester besteht.

10. Verfahren nach Anspruch 1, dadurch gekennzeichnet, daß der Ethylengehalt des Ethylen-Mischpolymeren 20—90 Gew.-% beträgt.

**Revendications**

1. Procédé de préparation d'un copolymère d'éthylène par copolymérisation d'éthylène avec une α-oléfine ou par copolymérisation d'éthylène avec une α-oléfine et un diène non conjugué, en présence d'un catalyseur de Ziegler-Natta comprenant un composé organo-aluminique et un composé d'un métal de transition appartenant au groupe IV ou V du tableau périodique des éléments ou comprenant ces composés et un agent d'activation de catalyseur, dans un milieu de polymérisation qui est pratiquement incapable de dissoudre le copolymère d'éthylène résultant, de manière à produire un copolymère d'éthylène caoutchouteux sous forme de particules, caractérisé en ce qu'on ajoute au système de polymérisation, en tant qu'agent anti-adhérence, une composition comprenant (a) un copolyumère polysulfone de bioxyde de soufre et d'un composé oléfinique, (b) une polyamine comprenant un produit de réaction de l'épichlorhydrine avec une N-(hydrocarbyl aliphatique)alkylènediamine, et (c) un acide sulfonique oléosoluble.

2. Procédé selon la revendication 1, dans lequel la quantité de l'agent anti-adhérence est de 5 à 100 ppm dans le milieu de polymérisation.

3. Procédé selon la revendication 1, dans lequel le milieu de polymérisation est le propylène, le propane, le 1-butène, le butane, le chlorure de méthylène, le chlorure d'éthylène ou le chlorure d'éthyle.

4. Procédé selon la revendication 1, dans lequel la-oléfine est le propylène ou le 1-butène et le diène non conjugué est le 1,4-hexadiène, le dicyclopentadiène ou le 5-éthylidène-2-norbornène.

5. Procédé selon la revendication 1, dans lequel la température de polymérisation est compris entre −40°C et 60°C.

6. Procédé selon la revendication 1, dans lequel le composé organo-aluminique est le triéthylaluminium, le chlorure de diéthylaluminium, le chlorure de diisobutylaluminium, le sesquichlorure d'éthylaluminium ou le dichlorure d'éthylaluminium.

7. Procédé selon la revendication 1, dans lequel le composé de métal de transition est le tétrachlorure de vanadium, l'oxytrichlorure de vanadium, le triéthoxyde d'acide vanadique, le diéthoxychlorure d'acide vanadique, l'éthoxydichloruer d'acide vanadique, le tributoxyde d'acide vanadique, le dibutoxychlorure d'acide vanadique, le butoxydichlorure d'acide vanadique ou le triacétylacétonate de vanadium.

8. Procédé selon la revendication 1, dans lequel l'agent d'activation de catalyseur est présent dans le système de polymérisation.

9. Procédé selon la revendication 1, dans lequel l'agent d'activation de catalyseur est le trichloracétate de méthyle, le perchlorocrotonate de butyle, le 2,3,4,4-tétrachloro-3-buténate de butyle ou l'ester d'éthylcellosolve et d'acide trichloroacétique.

10. Procédé selon la revendication 1, dans lequel la teneur en éthylène du copolymère d'éthylène est comprise entre 20 et 90% en poids.